# EUROPEAN PATENT APPLICATION

(11) **EP 2 213 924 A1**
(43) Date of publication of application: **04.08.2010**
(21) Application number: 08841858.7
(22) Date of filing: 22.10.2008
(51) Int. Cl.: F16L 19/06, F16L 19/08, F16L 21/08

(54) **PIPE FITTING**

(30) Priority: 25.10.2007 JP 2007277753
(71) Applicant: Asahi Organic Chemicals Industry Co., Ltd., Nobeoka-city Miyazaki 882-8688 (JP); Higashio Mech Co., Ltd., Kawachinagano-shi Osaka 586-0012 (JP)
(72) Inventor: TSUDA, Hiroyuki, Nobeoka-shi Miyazaki 882-8688 (JP); TAKADA, Tamotsu, Kawachinagano-shi Osaka 586-0012 (JP)
(74) Representative: Bibby, William Mark
(86) International application number: PCT/JP2008/069583
(87) International publication number: WO 2009/054534

(57) **Abstract**

A pipe joint wherein before insertion of the pipe, the cap nut and joint body are held in a state where the fastening ring is not pushed against the tapered inner surface and compressed and wherein, at the time of pipe insertion, the fastening ring is prevented from obstructing insertion of the pipe and from scratching the inserted pipe whereby leakage of fluid is prevented. This pipe joint is provided with a joint body (13) having a male thread (19) formed at one end and a shoulder (14) continuing from the same, a cap nut (5) having a female thread (18) to be screwed over the male thread, and a C-shaped retainer ring (2) arranged so that its outer surface abuts against a tapered inner surface (6) formed in a through hole of the joint body or the cap nut, wherein a detachable spacer (1) is arranged in a state held between the shoulder of the joint body and the cap nut.

## Description

### BACKGROUND ART

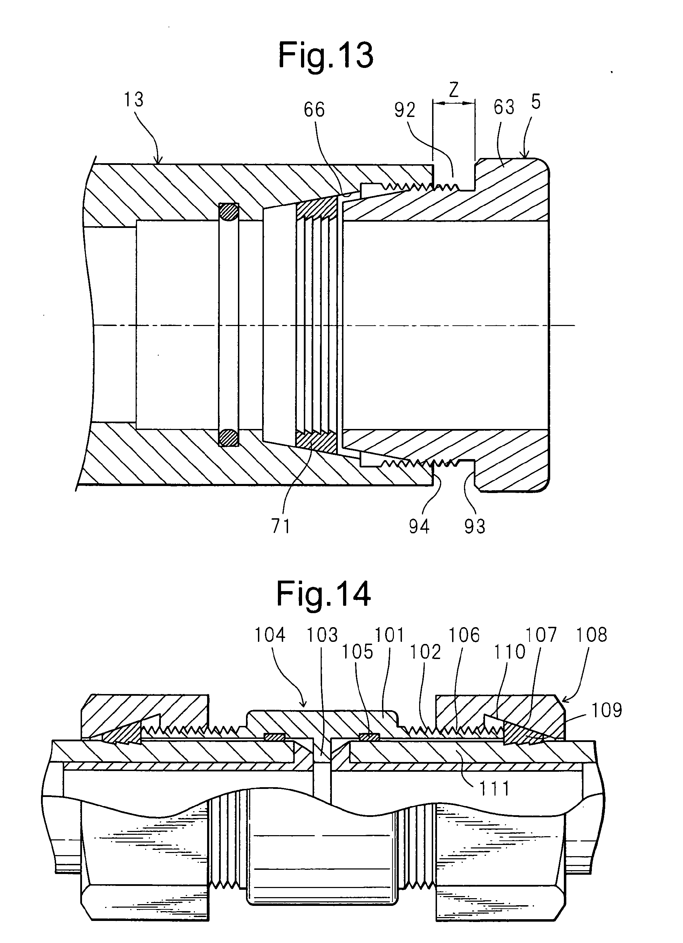

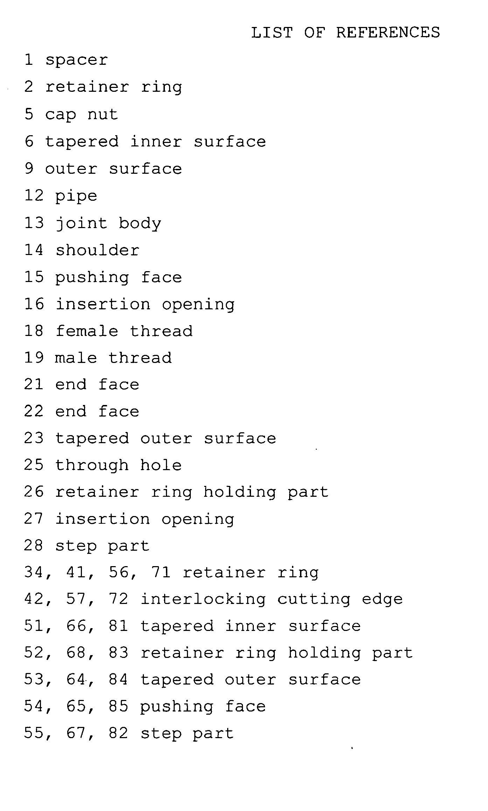

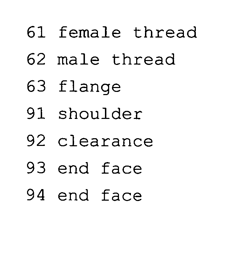

As a conventional pipe joint, as shown in FIG. 14, there is one having a main body 104 having an opening 101 for receiving an end of a soft pipe, a first thread 102 formed on the outer surface of the opening 101, and a stopper 103 formed deep in the opening 101 and stopping the pipe end, a packing 105 fit at the inner surface of the opening 101, a cap nut 108 formed at the inner surface of one end with a second thread 106 to be screwed into the first thread 102 and formed at the inner surface of the other end with a ring holding part 107, and a fastening ring 109 held in the ring holding part 107. The ring holding part 107 has a tapered inner surface 110 which becomes smaller in diameter from the one end side to the other end side, while the fastening ring 109 has a tapered outer surface following along the tapered inner surface 110 (for example, Japanese Patent Publication (A) No. 2000-240874).

### DISCLOSURE OF INVENTION

This conventional pipe joint screws together the second thread 106 of the cap nut 108 and the first thread 102 of the main body 104 to over fasten the cap nut 108 whereby the fastening ring 109 is pushed against the tapered inner surface 110 of the ring holding part 107 and compressed and the teeth of the fastening ring 109 are locked with the outer surface of the pipe 111.

However, in the state of the cap nut 108 and main body 104 before connecting the pipe 111, these parts are not screwed together for fastening and can rotate freely, therefore a worker would sometimes accidentally turn the cap nut 108 or the cap nut 108 would turn during the transport process. If the cap nut 108 is turned in the direction fastening it to the main body 104 before insertion of the pipe 111, the fastening ring 109 will be pushed against the tapered inner surface 110 and be compressed. If inserting the pipe 11 in this state, there is the problem that the fastening ring 109 may strike the end of the pipe 111 and obstruct insertion. If the teeth of the fastening ring 109 compressed when inserting the pipe 111 scratch the outer surface of the pipe 111, there is the problem that the fluid seal at the scratched parts will become insufficient and fluid will leak out.

Therefore, the present invention has as its object the provision of a pipe joint holding the cap nut and joint body in a state where the fastening ring is not pushed against the tapered inner surface and not compressed and thereby not allowing the fastening ring to obstruct insertion of the pipe at the time of pipe insertion and not scratch the inserted pipe and thereby preventing leakage of fluid.

To achieve the above object, the pipe joint according to the present invention comprises a pipe joint provided with a joint body having a male thread formed at an end and a shoulder continuing from the same, a cap nut having a female thread to be screwed over the male thread, and a C-shape retainer ring arranged so that its outer surface abuts against a tapered inner surface formed at a through hole of the joint body or the cap nut, wherein a spacer to be removed at the time of pipe installation is arranged in a state held between the shoulder of the joint body and the cap nut, as a first characterizing feature.

Further, the pipe joint according to the present invention comprises a pipe joint provided with a joint body having a female thread formed at an end, a cap nut having a male thread to be screwed into the female thread and a flange continuing from the same, and a C-shape retainer ring arranged so that its outer surface abuts against a tapered inner surface formed at a through hole of the joint body or the cap nut, wherein a spacer to be removed at the time of pipe installation is arranged in a state held between the joint body and the flange of the cap nut, as a second characterizing feature.

Further, the pipe joint according to the present invention comprises a joint wherein the retainer ring is arranged in a state with its inside diameter 0.5 to 3 mm larger than an outside diameter of a pipe inserted from the cap nut side, as a third characterizing feature.

Further, the pipe joint according to the present invention comprises a joint wherein the spacer is formed so as to satisfy d≤W≤d+6 where W is a width of the spacer in mm units and d is a distance in mm units between the cap nut end face and a shoulder end face of the joint body when the retainer ring starts to be compressed or a distance in mm units between a flange end face of the cap nut and the joint body end face, as a fourth characterizing feature.

Further, the pipe joint according to the present invention comprises a joint wherein the spacer is a belt member formed into a ring shape, as a fifth characterizing feature.

Further, the pipe joint according to the present invention comprises a joint wherein the spacer has cuts provided at two ends of the belt member engaged with each other, as a sixth characterizing feature.

Further, the pipe joint according to the present invention comprises a joint wherein the spacer is a C-shaped ring, as a seventh characterizing feature.

Further, the pipe joint according to the present invention comprises a pipe joint provided with a joint body having a male thread formed at an end and a shoulder continuing from the same, a cap nut having a female thread to be screwed over the male thread, and a C-shape retainer ring arranged so that its outer surface abuts against a tapered inner surface formed at a through hole of the joint body or the cap nut, a clearance formed between the shoulder and the cap nut, wherein the cap nut is assembled with the joint body so as to satisfy d≤Z≤d+6 where d is a distance in mm units between the shoulder and the cap nut when the retainer ring starts to be compressed and Z is a distance in mm units between the shoulder and the cap nut, as an eighth characterizing feature.

Further, the pipe joint according to the present invention comprises a pipe joint provided with a joint body having a female thread formed at an end, a cap nut having a male thread to be screwed into the female thread and a flange continuing from the same, and a C-shape retainer ring arranged so that its outer surface abuts against a tapered inner surface formed at a through hole of the joint body or the cap nut, a clearance formed between the shoulder and the cap nut, wherein the cap nut is assembled with the joint body so as to satisfy d≤Z≤d+6 where d is a distance in mm units between an end face of the flange and an end face of the joint body when the retainer ring starts to be compressed and Z is a distance in mm units between an end face of the flange and an end face of the joint body, as a ninth characterizing feature.

Further, the pipe joint according to the present invention comprises a pipe joint which has an inside cutting edge cutting a recessed groove into an outer surface of the pipe at one end of a break of the retainer ring and is provided with an interlocking means enabling the cap nut and the retainer ring to rotate together, as a 10th characterizing feature.

Further, the pipe joint according to the present invention comprises a pipe joint which has an interlocking cutting edge at an inner surface of the retainer ring, wherein by screwing the cap nut over the joint body, an outer surface of the retainer ring and the tapered inner surface are pressed together, and the interlocking cutting edge of the retainer ring cuts into the outer surface of the pipe, as an 11th characterizing feature.

The present invention exhibits the following advantageous effects.
(1) Reduction of diameter of the retainer ring before pipe insertion is prevented, so the retainer ring will not obstruct insertion of the pipe, work at the time of pipe insertion can be reliably performed, and scratching of the pipe can be prevented, so leakage of fluid from the scratched parts can be prevented.
(2) Before connection of a pipe, the spacer can prevent the cap nut from being fastened more than necessary, the retainer ring can be prevented from being compressed, and a worker can be prevented from accidentally turning the cap nut for fastening before pipe connection.
(3) The retainer ring is given an inside diameter 0.5 to 3 mm larger than the outside diameter of the pipe, so a clearance is maintained between the inner surface of the retainer ring and the outer surface of the pipe, the retainer ring will not obstruct the insertion of the pipe, work at the time of pipe insertion can be reliably performed, and the pipe joint can be formed compactly without increase of its dimensions.
(4) A certain clearance can be provided or a spacer held between the cap nut and shoulder of the joint body or between the flange of the cap nut and the joint body to maintain the best state for pipe insertion at all times.
(5) The spacer is a belt member or a C-shaped ring, so the spacer can be easily detached at the time of pipe connection.
(6) Connection work of the pipe joint at the installation site can be quickly and smoothly performed making this extremely convenient.

Below, the present invention will be more easily understood from the attached drawings and the description of the preferred embodiments of the invention.

### BRIEF DESCRIPTION OF THE DRAWINGS

FIG. 1 is a cross-sectional side view showing a first embodiment of a pipe joint of the present invention.
FIG. 2 is a cross-sectional side view showing a state in the middle of screwing in FIG. 1.
FIG. 3 is a cross-sectional side view showing a state after screwing in FIG. 1.
FIG. 4 is a cross-sectional view along the line a-a of FIG. 1.
FIGS. 5 are perspective views showing a spacer, wherein (a) is a front view of a belt member before fabrication and (b) is a perspective view after fabrication.
FIG. 6 is a perspective view showing another embodiment of a spacer.
FIG. 7 is a cross-sectional side view showing a second embodiment of a pipe joint of the present invention.
FIG. 8 is a cross-sectional side view showing a state after screwing in FIG. 7.
FIG. 9 is a cross-sectional side view showing a third embodiment of a pipe joint of the present invention.
FIG. 10 is a cross-sectional side view showing a fourth embodiment of a pipe joint of the present invention.
FIG. 11 is a cross-sectional side view showing a fifth embodiment of a pipe joint of the present invention.
FIG. 12 is a cross-sectional side view showing a sixth embodiment of a pipe joint of the present invention.
FIG. 13 is a cross-sectional side view showing a seventh embodiment of a pipe joint of the present invention.
FIG. 14 is a cross-sectional side view showing a conventional pipe joint.

### BEST MODE FOR CARRYING OUT THE INVENTION

Below, a first embodiment of the present invention will be explained in detail based on the drawings.

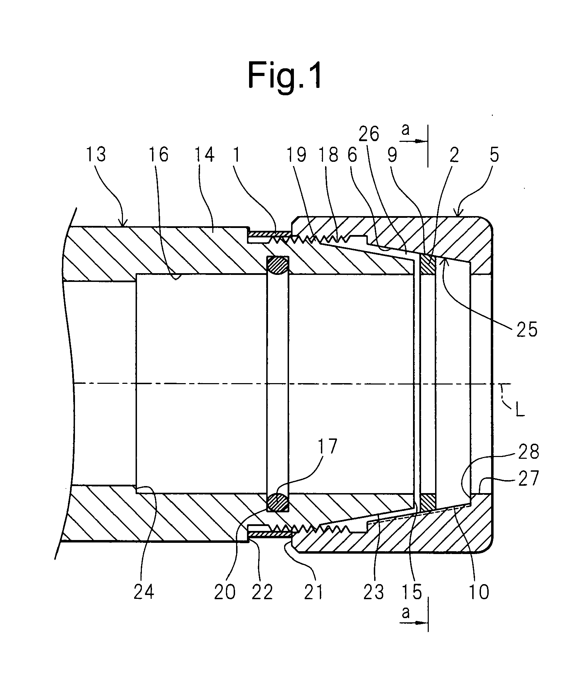

As shown in FIG. 1 to FIG. 5, the pipe joint according to the present invention is provided with a joint body 13 having a male thread 19 and a shoulder 14 continuing from the same and with a cap nut 5 to be screwed over the male thread 19 of the joint body 13.

Specifically, the joint body 13 has an insertion opening 16 into which a pipe 12 is to be inserted. Inside the insertion opening 16, a holding groove 20 is formed for holding an O-ring or other seal member 17. At the front end side of the joint body 13, there is a tapered outer face 23 abutting against the tapered inner surface 6 of the cap nut 5 when screwing is completed. The front end of the tapered outer surface 23 has a pushing face 15 pushing the retainer ring 2 when the cap nut 5 is fastened to the joint body 13.

On the other hand, the cap nut 5 has a through hole 26 in which the pipe 12 is inserted. The through hole 25 is comprised of an insertion hole part 27 formed at one end of the cap nut 5 and into which the pipe 12 is inserted, a circumferential step part 28 formed at the inside of the insertion hole part 27, a tapered inner surface 6 formed increasing in diameter from the circumferential step part 28 inward, and a female thread 18 formed at the other end and screwed over the male thread 19 of the joint body 13. Further, inside the step part 28 and tapered inner surface 6, a retainer ring holding part 26 is formed.

Note that, in FIG. 1, this joint body 13 is shown only partially (in cross-section), but this joint body 13 as a whole comes in various forms such as a straight, elbow, cheese, socket, or other type. Further, a similar structure may be formed at the not illustrated other end.

Further, deep in the insertion opening 16, a stopping use step part 24 against which the front end face of the inserted pipe 12 abuts is formed.

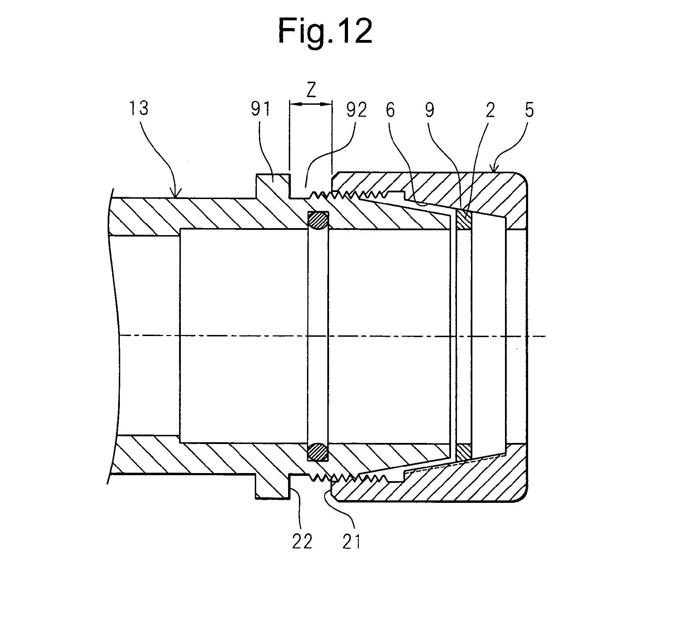

Further, the shoulder 14 of the joint body 13 may be of any shape so long as enabling the spacer 1 to be held with the cap nut 5. As shown in FIG. 1, it is possible to form it into a cylindrical shape with a diameter larger than the male thread 19 or to form it into a flange shape such as shown in FIG. 12.

Further, the material of the joint body 13 and cap nut 5 may be any of polyvinyl chloride, polypropylene, polyethylene, polystyrene, polyacetal, acrylonitrile butadiene styrene copolymer, polyvinylidene fluoride, polytetrafluoroethylene, tetrafluoroethylene-perfluoroalkyl vinyl ether copolymer, polychlorotrifluoroethylene, or other plastic, iron, copper, copper alloy, brass, aluminum, stainless steel, or other metal, or porcelain or other ceramic. In particular, for chemical pipelines, superior corrosion resistance plastic pipe joints are preferably used.

When the cap nut 5 is screwed to the joint body 13, a spacer 1 is provided between the cap nut 5 and the shoulder 14 of the joint body 13. The spacer 1 is held in a state lightly held between the end face 21 of the facing cap nut 5 and end face 22 of the shoulder 14 of the joint body 13.

Further, the spacer 1 is formed to be able to be detached after insertion of the pipe 12.

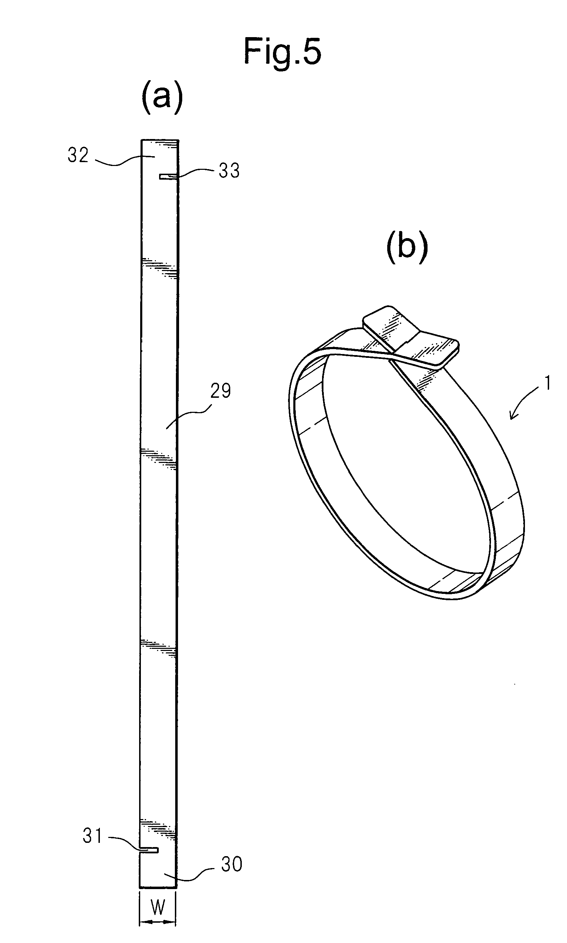

Specifically, in FIG. 5, the spacer 1 is comprised of a belt member 29 (see FIG. 5(a)) at one end 30 of which a cut 31 of about half of the width of the belt member 29 is provided from one side of the two long sides. At the other end 32 of the belt member 29, a cut 33 of about half of the width of the belt member 29 is provided from the other side of the two long sides. The belt member 29 is bent into a ring shape and the cuts 31, 33 are engaged whereby a ring shape spacer 1 is formed (see FIG. 5(b)).

Note that, the above spacer 1 need only be comprised of a belt member 29 formed into a ring shape. Other shapes of cuts may be provided to form it into a ring shape, the two ends may be provided with engageable projections or recesses to form it into a ring shape, or part of the circumference of the ring shaped belt member 29 may be formed to be able to be torn off.

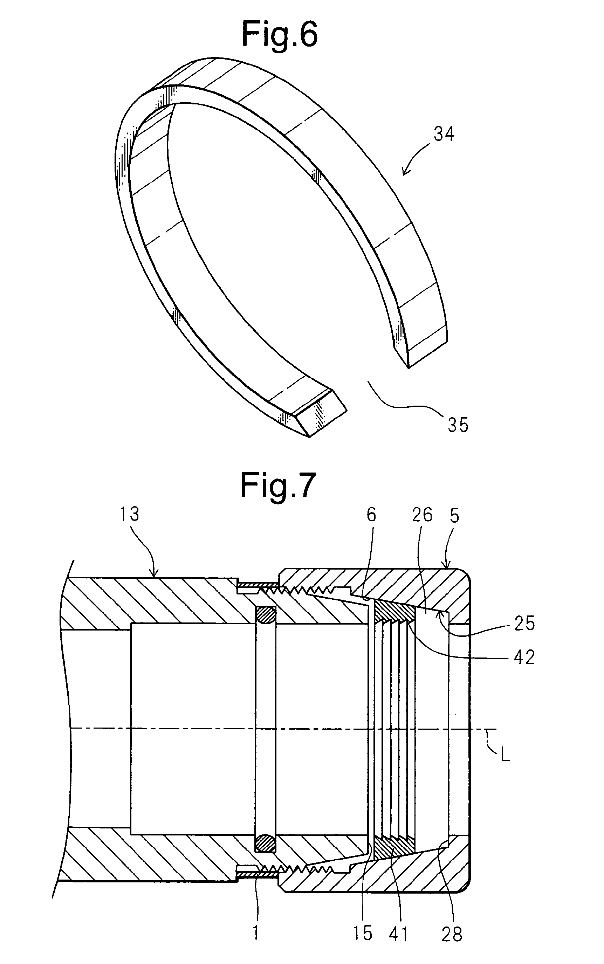

Further, in the present embodiment, a belt member 29 was used, but, as shown in FIG. 6, the spacer 34 may also be made a C-shaped ring having a single break 35 in its circle. The spacer 34 is not particularly limited in shape so long as the break 35 can be opened up and the spacer can be attached to be positioned between the end face 21 of the cap nut 5 and the end face 22 of the shoulder 14 of the joint body 13.

Further, the spacers 1, 34 are preferably formed by plastic. Polypropylene, polyethylene, polystyrene, ABS plastic, etc. are preferable.

Furthermore, in FIG. 1 to FIG. 5, the pipe joint has a C-shaped retainer ring 2 having a single break in its circle. This retainer ring 2 is arranged so that its outer surface 9 abuts against the tapered inner surface 6 of the through hole 25 of the cap nut 5 and is provided with an interlocking means 7 for enabling the cap nut 5 and retainer ring 2 to turn together.

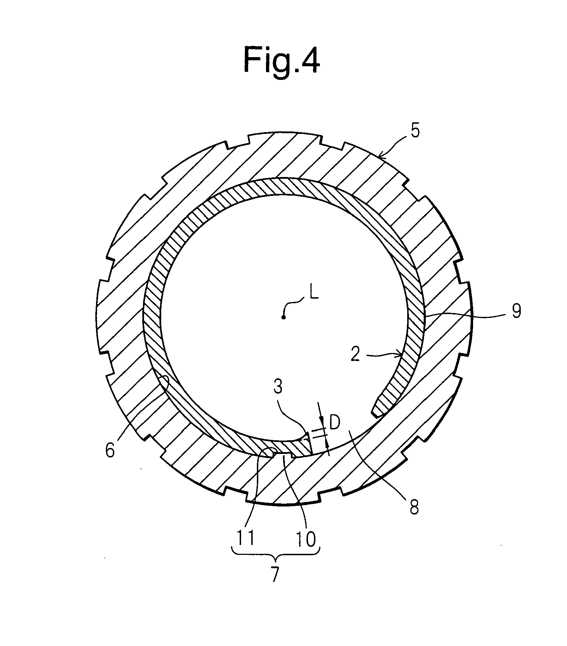

Specifically, the cap nut 5 is formed with a projecting ridge 10 extending along the axial center direction L of the pipe 12 at the tapered inner surface 6, while the retainer ring 2 is formed with a recessed groove 11 locking with the above projecting ridge 10 at its outer surface 9 (see FIG. 4).

Further, the above interlocking means 7 is comprised of the projecting ridge 10 of the cap nut 5 and the recessed groove 11 of the retainer ring 2. The projecting ridge 10 is interlocked with the recessed groove 11 slidably in the axial center direction L.

Note that, for the above interlocking means 7, the cap nut 5 may be provided with a recessed groove (not shown) instead of the projecting ridge 10, and the retainer ring 2 may be provided with an interlocking projection (not shown) interlocking with the recessed groove of the cap nut 5 instead of the recessed groove 11.

Further, in the illustrated example, the recessed groove 11 is formed near one end of the outer surface 9 of the retainer ring 2 (side with inside cutting edge 3), but the recessed groove 11 may also be provided near the other end of the outer surface 9 (side without inside cutting edge 3) or at the middle part. A plurality of them may also be provided.

Here, the "one end" of the retainer ring 2 indicates the side becoming the head of the turning retainer ring 2 when screwing on the cap nut 5.

Further, as shown in FIG. 4, one end of the break 8 of the retainer ring 2 has an inside cutting edge 3 cutting a groove 4 into the outer surface of the pipe 12. The inside cutting edge 3 is formed by a cutting edge of a predetermined projecting dimension D projecting inwardly in the diametrical direction from the inner surface of the retainer ring 2. The predetermined projecting dimension D is set in accordance with the wall thickness dimension of the connected pipe 12 to 0.3 mm to 0.7 mm, but about 0.5 mm is preferable. If the projecting dimension D is less than 0.3 mm, the recessed groove 4 cut into the outer surface of the pipe 12 will be shallow and the effect of retaining the pipe 12 will be small. Further, when over 0.7 mm, much force will end up being required to fasten the cap nut 5. Further, the wall thickness will become thinner and the pipe 12 is liable to fall in strength, so this is inconvenient.

The retainer ring 2 is preferably one formed by stainless steel or another hard material or a C-shaped ring formed by plastic provided with an inside cutting edge 3 formed by stainless steel or another metal material.

Next, the method of use (action) of the pipe joint of the first embodiment will be explained.

First, the pipe joint before connection of the pipe 12 is in the state of FIG. 1. The spacer 1 is arranged held between the end face 21 of the cap nut 5 and the end face 22 of the shoulder 14 of the joint body 13, so even if fastening the cap nut 5 to the joint body 13 from this state, the spacer 1 suppresses rotation of the cap nut 5 and prevents the cap nut 5 from being fastened by more than a predetermined amount. For this reason, the retainer ring 2 will never be pushed to the tapered inner surface 6 inside the retainer ring holding part 26, so will not be compressed.

The smallest inside diameter of the retainer ring 2 at this time is set so to become 0.5 mm to 3.0 mm larger than the outside diameter of the pipe 12, but 0.7 to 1.5 mm is more preferable. If less than 0.5 mm, if the retainer ring 2 is held in a slanted state in the retainer ring holding part 26, the clearance between the inside cutting edge 3 of the retainer ring 2 and the outer surface of the pipe 12 will be eliminated and the inside cutting edge 3 of the retainer ring 2 will abut against the end of the pipe 12 and obstruct insertion or the inside cutting edge 3 will be liable to scratch the outer surface of the pipe 12. Further, when over 3.0 mm, the amount by which the cap nut 5 is turned until the retainer ring 2 locks with the pipe 12 will increase, the workability will deteriorate, the size of the thread part will have to be increased, and the dimensions of the pipe joint will become larger, so this is inconvenient.

Further, the pipe 12 is inserted from the insertion opening 27 of the cap nut 5, is further passed through the inner surface of the retainer ring 2, and is next inserted into the insertion opening 16 of the joint body 13 until the front end face of the pipe 12 abuts against the stopping use step part 24 of the insertion opening 16 of the joint body 13.

Further, the spacer 1 is detached from the pipe joint, and the cap nut 5 is fastened to the joint body 13.

For detachment of the spacer 1, in FIG. 5(b), the end 30 and end 32 in the state sticking out from the spacer 1 may be twisted to separate the mutually engaged cuts 31, 33 and thereby simply detach the spacer 1 from the pipe joint.

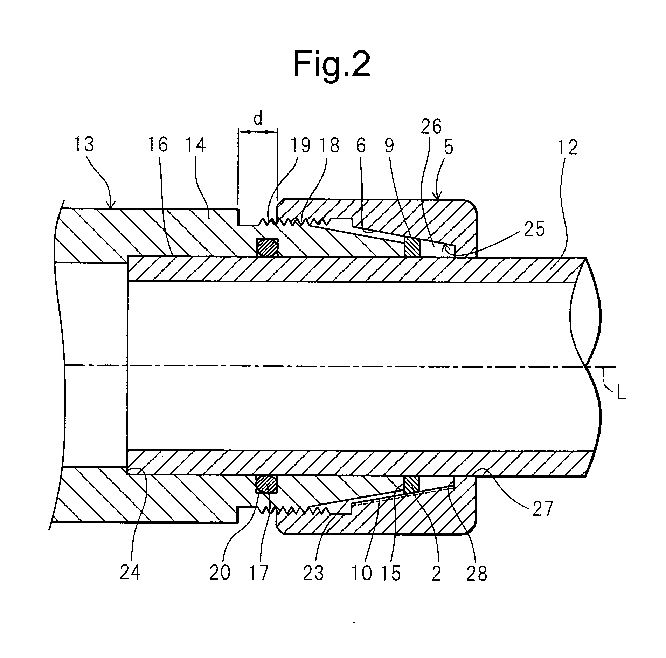

When the spacer 1 is attached, the retainer ring 2 is held in the retainer ring holding part 26 in a state with clearance from the tapered inner surface 6 of the cap nut 5 or the pushing face 15 of the joint body 13, but if fastening the cap nut 5 to the joint body 13, gradually the clearance is narrowed. The pushing face 15 of the front end of the joint body 13 abuts against the end face of the retainer ring 2, and the outer surface 9 of the retainer ring 2 abuts against the tapered inner surface 6 (state of FIG. 2). This state is the state immediately before the retainer ring 2 starts to be compressed. By further fastening the cap nut 5 from this state, the outer surface 9 of the retainer ring 2 is pushed against the tapered inner surface 6 and starts to be compressed.

When the distance between the end face 21 of the cap nut 5 and the end face 22 of the shoulder 14 of the joint body 13 at that time is designated as d (mm), the width W (mm) of the spacer 1 is set to d≤W≤d+6. By having W be set the same as d or larger than d, the pipe joint before connection of a pipe 12 is set so that the cap nut 5 cannot be fastened to a state where the retainer ring 2 starts to be compressed. If d>W, the retainer ring 2 will start to be compressed, so there is the good possibility that the clearance between the inside cutting edge 3 of the retainer ring 2 and the outer surface of the pipe 12 will become smaller, the inside cutting edge 3 of the retainer ring 2 will abut against the end of the pipe 12 and obstruct its insertion, and the inside cutting edge 3 will scratch the outer surface of the pipe 12. Further, when W>d+6, the amount by which the cap nut 5 is turned until the retainer ring 2 locks with the pipe 12 will increase, the workability of pipe connection will deteriorate, the size of the thread part will have to be increased, and the dimensions of the pipe joint will become larger, so this is inconvenient. Here, since the cap nut 5 is screwed to the joint body 13 for pipe connection, the pipe joint has a suitable range of size of 10 to 50 mm or so. At this time, the pitch of the female thread 18 and male thread 19 is set to 1 to 3 mm. When the cap nut 5 is rotated one turn, it moves by the amount of the dimension of the pitch, so it is enough that W≤d+6 so that the retainer ring 2 starts being compressed before that cap nut 5 is rotated two turns.

Further, the width W (mm) of the spacer 1 should be one giving an extra margin for the cap nut 5 to rotate from half a turn to one turn until the state right before the retainer ring 2 starts to be compressed. The pitch is set to 1 to 3 mm, so d+0.5≤W≤d+3 is more preferable.

Specifically, if the pitch of the thread is P, d≤W5d+2P is preferable and d+0.5P≤W≤d+P is more preferable.

Further, if further fastening the cap nut 5 to the joint body 13 from the state of this FIG. 2, the pushing face 15 of the front end of the joint body 13 will push the retainer ring 2 against the step part 28 side of the through hole 25 of the cap nut 5. This being so, the retainer ring 2 slides while turning together with the cap nut 5 along the tapered inner surface 6 in the axial center direction L and is gradually compressed. After this, the pipe 12 will not rotate with respect to the joint body 13. The retainer ring 2 turns about the pipe 12 whereby the inside cutting edge 3 cuts a shallow recessed groove 4 in a ring shape at the outer surface of the pipe 12.

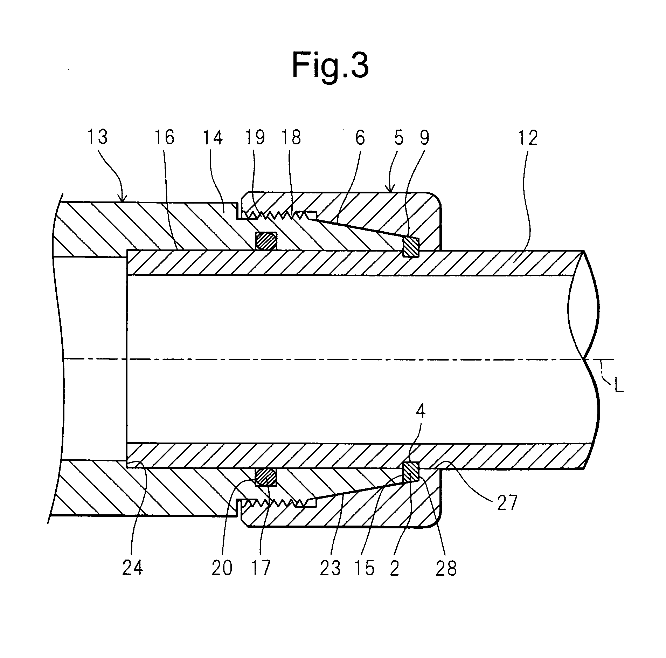

Further, as shown in FIG. 3, if screwing until the retainer ring 2 abuts against the step part 28 of the cap nut 5, the screwing operation ends. At this time, the retainer ring 2 is held between the step part 28 of the cap nut 5 and the pushing face 15 of the joint body 13. Due to this, the pipe 12 with the retainer ring 2 locked in the recessed groove 4 is firmly fixed to the pipe joint.

Note that, as the material of the pipe 12, polypropylene (PP), polyvinyl chloride, or another plastic is preferable, but it may also be a soft metal (copper or brass) which is easy to cut.

In this way, since a spacer 1 is provided at the pipe joint before pipe installation, before connecting a pipe 12, the spacer 1 will suppress rotation of the cap nut 5, so the cap nut 5 cannot be fastened up to a state where the retainer ring 2 would be compressed. Therefore, despite the simple structure and small number of parts, at the time of pipe insertion, the retainer ring 2 will not obstruct insertion of the pipe 12, the work at the time of insertion of the pipe 12 can be performed more reliably, and, further, it is possible to prevent the inside cutting edge 3 of the retainer ring 2 from scratching the outer surface of the pipe 12 and leakage of fluid from the scratch marks. Due to this, it is possible to prevent a worker from accidentally fastening the cap nut 5 before connection of the pipe 12. At the time of pipe installation, the spacer 1 is detached from the pipe joint. The pipe joint can therefore be maintained in a state best for insertion of the pipe 12 at all times.

Further, the spacer 1 can be easily detached without disassembling the pipe joint, connection work of the pipe 12 at the installation site can be performed quickly and smoothly, the pipe 12 is reliably connected to the pipe joint, and there is no liability of unintentional detachment after installation, so this is convenient for connecting pipes at various locations.

Next, a detailed explanation will be given based on a figure showing a second embodiment of the present invention. In the present embodiment, components the same as the first embodiment will be shown assigned the same references.

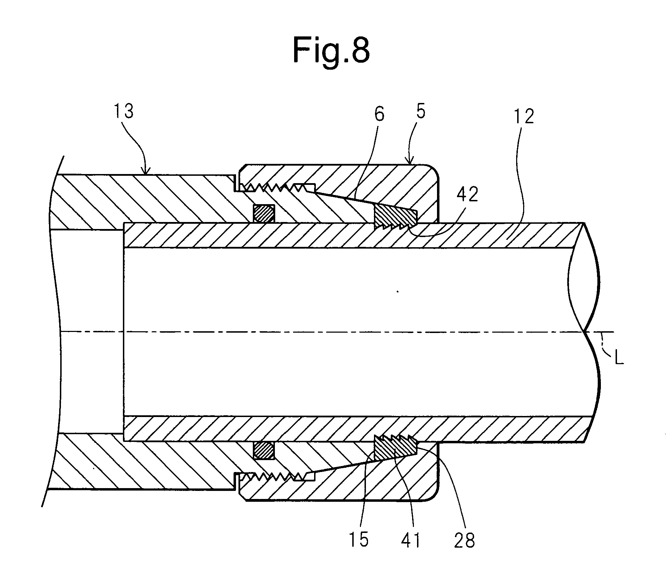

In FIG. 7 and FIG. 8, the retainer ring 41 arranged at the retainer ring holding part 26 of the cap nut 5 has a break interrupting the circle. At its inner surface, an interlocking cutting edge 42 is formed with a sawtooth cross-sectional shape locking with the outer surface of the pipe 12.

The retainer ring 41 is formed by stainless steel or another hard material, but it is also possible that only the portion of the interlocking cutting edge 42 be formed by stainless steel or another hard material and that the other portions be formed by a plastic. Further, when the pipe 12 is a plastic, it may be formed by a plastic having a higher hardness than the plastic of the pipe 12.

Note that, the retainer ring 41 and the cap nut 5 of the present embodiment are not provided with interlocking means, but interlocking means may also be provided. The rest of the configuration of the second embodiment is similar to the first embodiment, so the explanation will be omitted.

Next, the method of use (action) of the pipe joint of the second embodiment will be explained.

If inserting the pipe 12 from the state of FIG. 7, detaching the spacer 1 from the pipe joint, and fastening the cap nut 5 on the joint body 13, the pushing face 15 of the front end of the joint body 13 will abut against the end face of the retainer ring 41 and will push the retainer ring 41 to the step part 28 side of the through hole 25 of the cap nut 5. This being so, the retainer ring 41 will slide along the tapered inner surface 6 in the axial center direction L and gradually be compressed. At this time, the interlocking cutting edge 42 of the retainer ring 41 will cut into the outer surface of the pipe 12.

Further, the retainer ring 41 is held between the step part 28 of the cap nut 5 and the pushing face 15 of the joint body 13 whereby the pipe 12 is strongly fixed to the pipe joint (state of FIG. 8).

At this time, in the same way as the first embodiment, due to the spacer 1 being provided, before connecting the pipe 12, the spacer 1 suppresses rotation of the cap nut 5, the cap nut 5 cannot be fastened to a state where the retainer ring 2 starts being compressed, and the best state for insertion of the pipe 12 can be constantly maintained.

Next, a detailed explanation will be given based on a figure showing a third embodiment of the present invention. In the present embodiment, components the same as the first embodiment will be shown assigned the same references.

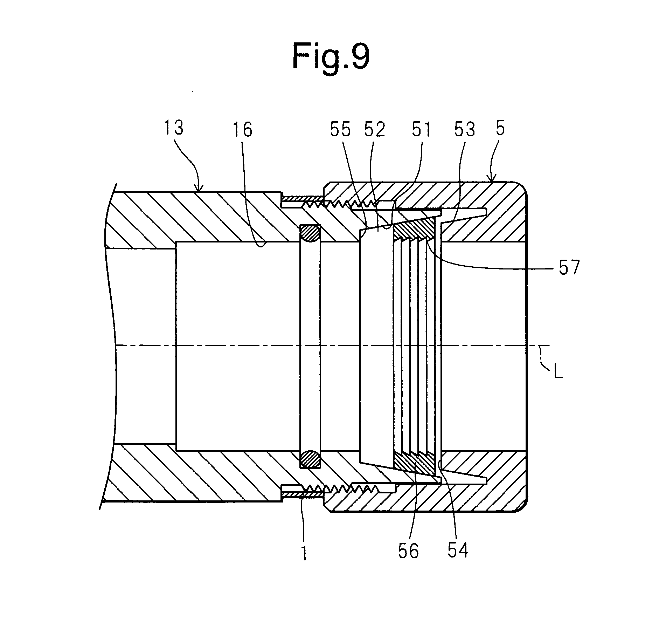

In FIG. 9, at the opening side of the insertion opening 16, the joint body 13 has a tapered inner surface 51 formed reduced in diameter toward the deep side and a circumferential step part 55 formed at the inside of the insertion opening 16 at the reduced diameter side of the tapered inner surface 51. Inside the step part 55 and tapered inner surface 51, a retainer ring holding part 52 is formed. At the inner circumference of the cap nut 5, there is a tapered outer surface 53 formed with a projection for engaging with the retainer ring holding part 52 and abutting against the tapered inner surface 51 of the joint body 13 when the screwing operation is completed. The front end of the tapered outer surface 53 has a pushing face 54 pushing against the retainer ring 56 when fastening the cap nut 5 to the joint body 13.

The retainer ring 56 arranged at the retainer ring holding part 52 of the cap nut 5 has a break interrupting the circle. At the inner surface, an interlocking cutting edge 57 with a sawtooth cross-sectional shape locking with the outer surface of the pipe (not shown) is formed. Note that, the retainer ring 56 and cap nut 5 of the present embodiment are not provided with interlocking means, but interlocking means may also be provided.

The rest of the configuration of the third embodiment is similar to the first embodiment, so the explanation will be omitted.

Next, the method of use (action) of the pipe joint of the third embodiment will be explained.

From the state of FIG. 9, if inserting a pipe (not shown), detaching the spacer 1 from the pipe joint, and fastening the cap nut 5 to the joint body 13, the pushing face 54 of the cap nut 5 will push the retainer ring 56 to the deep side of the insertion opening 16 of the joint body 13. This being done, the retainer ring 56 will slide along the tapered inner surface 51 in the axial center direction L and gradually be compressed. At this time, the interlocking cutting edge 57 of the retainer ring 56 will cut into the outer surface of the pipe.

The action of further fastening the cap nut and making the retainer ring 56 lock against the pipe is similar to the second embodiment, so the explanation will be omitted.

Next, a detailed explanation will be given based on a figure showing a fourth embodiment of the present invention. In the present embodiment, components the same as the first embodiment will be shown assigned the same references.

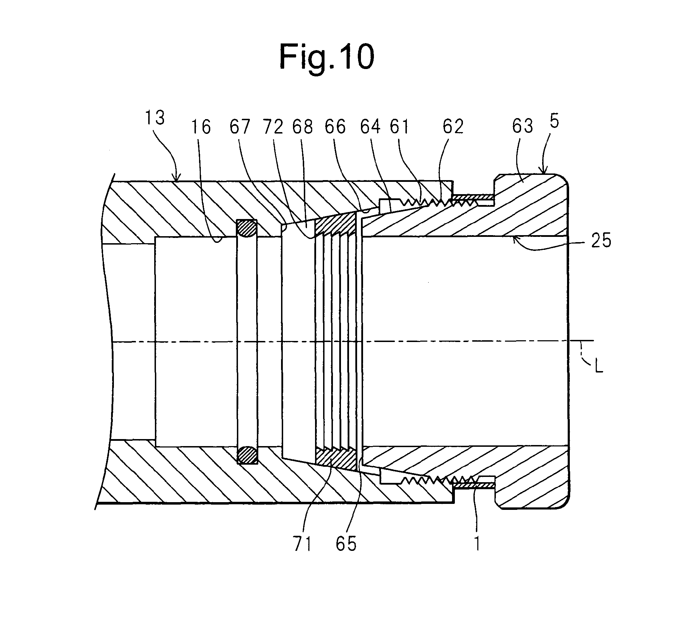

In FIG. 10, the pipe joint is provided with a joint body 13 having a female thread 61 and a cap nut 5 having a male thread 62 to be screwed into the female thread 61 of the joint body 13 and a flange 63 continuing from the same.

Specifically, cap nut 5 has a through hole 25 in which a pipe (not shown) is inserted. The front end side of the cap nut 5 has a tapered outer surface 64 which abuts against the tapered inner surface 66 of the joint body 13 when the screwing operation is completed. The front end of the tapered outer surface 64 has a pushing face 65 pushing against the retainer ring 71 when fastening the cap nut 5 to the joint body 13. Further, the other end is formed with a flange 63 and a male thread 62 continuing from the flange 63 and to be screwed into the female thread 61 of the joint body 13.

On the other hand, the joint body 13 has an insertion opening 16 in which a pipe 12 is inserted. The insertion opening 16 is comprised of a female thread 61 at the opening side, a tapered inner surface 66 formed continuing from the deep side of the female thread 61 and compressed toward the inside, and a circumferential step part 67 formed at the inside of the insertion opening at the reduced diameter side of the tapered inner surface 66. Further, inside the step part 67 and tapered inner surface 66, a retainer ring holding part 68 is formed.

The retainer ring 71 arranged at the retainer ring holding part 68 of the cap nut 5 has a break interrupting the circle. At the inner surface, an interlocking cutting edge 72 with a sawtooth cross-sectional shape locking with the outer surface of the pipe (not shown) is formed. Note that, the retainer ring 71 and the cap nut 5 of the present embodiment are not provided with interlocking means, but interlocking means may also be provided.

The rest of the configuration of the fourth embodiment is similar to the first embodiment, so the explanation will be omitted.

Next, the method of use (action) of the pipe joint of the fourth embodiment will be explained.

If inserting the pipe (not shown) from the state of FIG. 10, detaching the spacer 1 from the pipe joint, and fastening the cap nut 5 on the joint body 13, the pushing face 65 of the front end of the cap nut 5 will push the retainer ring 71 to the deep side of the insertion opening 16 of the joint body 13. This being so, the retainer ring 71 will slide along the tapered inner surface 66 in the axial center direction L and gradually be compressed. At this time, the interlocking cutting edge 72 of the retainer ring 71 will cut into the outer surface of the pipe.

The action of further fastening the cap nut and making the retainer ring 71 lock against the pipe is similar to the second embodiment, so the explanation will be omitted.

Next, a detailed explanation will be given based on a figure showing a fifth embodiment of the present invention. In the present embodiment, components the same as the first embodiment will be shown assigned the same references.

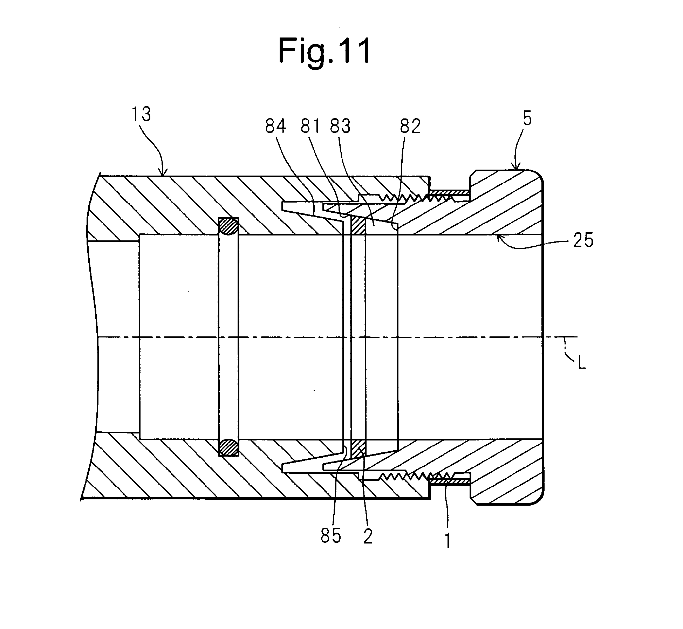

In FIG. 11, at the front end side of the through hole 25 of the cap nut 5, there are a tapered inner surface 81 formed reduced in diameter toward the inside and a circumferential step part 82 formed at an inside of the through hole 25 at the reduced diameter side of the tapered inner surface 81. Inside the step part 82 and the tapered inner surface 81, a retainer ring holding part 83 is formed.

At the inner circumference of the joint body 13 at the opening side, there is a tapered outer surface 84 formed with a projection for engaging with the retainer ring holding part 83 and abutting against the tapered inner surface 81 of the cap nut 5 when the screwing operation is completed. The front end of the tapered outer surface 84 has a pushing face 85 pushing against the retainer ring 2 when fastening the cap nut 5 to the joint body 13.

Further, the pipe joint has interlocking means for enabling the cap nut 5 and the retainer ring 2 to rotate together (similar configuration to interlocking means of first embodiment).

The rest of the configuration of the fifth embodiment is similar to the fourth embodiment, so the explanation will be omitted.

Next, the method of use (action) of the pipe joint of the fifth embodiment will be explained.

From the state of FIG. 11, if inserting a pipe (not shown), detaching the spacer 1 from the pipe joint, and fastening the cap nut 5 to the joint body 13, the pushing face 54 of the cap nut 5 will abut against the end face of the retainer ring 2, the interlocking means of the pushing face 85 and retainer ring 2 will engage, and the cap nut 5 and retainer ring 2 will rotate together.

The action of further fastening the cap nut and making the retainer ring 2 lock against the pipe is similar to the first embodiment, so the explanation will be omitted.

Next, a detailed explanation will be given based on a figure showing a sixth embodiment of the present invention. In the present embodiment, components the same as the first embodiment will be shown assigned the same references.

In FIG. 12, the joint body 13 is formed with a flange shaped shoulder 91, and a clearance 92 is formed between the cap nut 5 and the shoulder 91 of the joint body 13. The width Z (mm) of this clearance 92 is set to a width Z (mm) of the clearance 92 of d≤Z≤d+6 at the time of a distance d (mm) between the facing end face 21 of the cap nut 5 and end face 22 of the shoulder 91 of the joint body 13 right before the outer surface 9 of the retainer ring 2 abuts against the tapered inner surface 6 and the retainer ring 2 starts to be compressed.

By having Z be set the same as d or larger than d, the pipe joint before connection of a pipe (not shown) will be held in a state with the retainer ring 2 not compressed. If d>Z, the retainer ring 2 will start to be compressed, so there is the good possibility that the retainer ring 2 will abut against the end of the pipe and obstruct insertion or the retainer ring 2 will scratch the outer surface of the pipe. Further, if Z>d+6, the amount by which the cap nut 5 is turned until the retainer ring 2 locks with the pipe will increase, the workability of pipe connection will deteriorate, the size of the thread part will have to be increased, and the dimensions of the pipe joint will become larger, so this is inconvenient.

Further, the width Z (mm) of the clearance 92 should be one giving an extra margin for the cap nut 5 to rotate from half a turn to one turn until the state right before the retainer ring 2 starts to be compressed. It is more preferable to set the pitch of the thread to 1 to 3 mm and that d+0.5≤W≤d+3.

Specifically, the pipe joint has a suitable range of size of 10 to 50 mm, so if the pitch of the thread is P, d≤W≤d+2P is preferable and d+0.5P≤W≤d+P is more preferable.

The rest of the configuration of the sixth embodiment is similar to the first embodiment, so the explanation will be omitted.

Next, the method of use (action) of the pipe joint of the sixth embodiment will be explained.

From the state of FIG. 12, in the present embodiment, since no spacer (see FIG. 1) is provided, after inserting the pipe (not shown), the cap nut 5 is fastened for connection. The rest of the action of the sixth embodiment is similar to the first embodiment, so the explanation will be omitted.

Note that, the pipe joint of the present embodiment in which the spacer is not provided may also have a spacer attached to it before pipe connection to match the width Z of the clearance 92 with the width W of the spacer, then the pipe connected. In this case, the spacer is used as a ruler for matching the clearance 92 to the width optimum for connection. In this case, after the pipe is inserted, the spacer 1 is removed and then the cap nut 5 is fastened for pipe connection.

Next, a detailed explanation will be given based on a figure showing a seventh embodiment of the present invention. In the present embodiment, components the same as in the fourth embodiment will be shown assigned the same references.

In FIG. 13, a clearance 92 is formed between the flange 63 of the cap nut 5 and the joint body 13. The width Z (mm) of this clearance 92 is set to a width Z (mm) of the clearance 92 of d≤Z≤d+6 at the time of a distance d (mm) between the facing end face 93 of the flange 63 of the cap nut 5 and end face 94 of the joint body 13 right before the outer surface of the retainer ring 71 abuts against the tapered inner surface 66 and the retainer ring 71 starts to be compressed.

The rest of the configuration of the seventh embodiment is similar to the fourth embodiment, so the explanation will be omitted.

Next, the method of use (action) of the pipe joint of the seventh embodiment will be explained.

From the state of FIG. 13, in the present embodiment, since no spacer (see FIG. 10) is provided, after inserting the pipe (not shown), the cap nut 5 is fastened for connection. The rest of the action of the seventh embodiment is similar to the fourth embodiment, so the explanation will be omitted.

Note that, the present invention was explained in detail based on specific embodiments, but a person skilled in the art could make various changes, modifications, etc. without departing from the claims and idea of the present invention.

## Claims

1. A pipe joint provided with a joint body having a male thread formed at an end and a shoulder continuing from the same, a cap nut having a female thread to be screwed over said male thread, and a C-shape retainer ring arranged so that its outer surface abuts against a tapered inner surface formed at a through hole of said joint body or said cap nut,
said pipe joint **characterized in that** a spacer to be removed at the time of pipe installation is arranged in a state held between said shoulder of said joint body and said cap nut.

2. A pipe joint provided with a joint body having a female thread formed at an end, a cap nut having a male thread to be screwed into said female thread and a flange continuing from the same, and a C-shape retainer ring arranged so that its outer surface abuts against a tapered inner surface formed at a through hole of said joint body or said cap nut,
said pipe joint **characterized in that** a spacer to be removed at the time of pipe installation is arranged in a state held between said joint body and said flange of said cap nut.

3. A pipe joint as set forth in claim 1 or claim 2, wherein said retainer ring is arranged in a state with its inside diameter 0.5 to 3 mm larger than an outside diameter of a pipe inserted from said cap nut side.

4. A pipe joint as set forth in any one of claim 1 to claim 3, wherein said spacer is formed so as to satisfy d≤W≤d+6 where W is a width of the spacer in mm units and d is a distance in mm units between said cap nut end face and a shoulder end face of said joint body when said retainer ring starts to be compressed or a distance in mm units between a flange end face of said cap nut and said joint body end face.

5. A pipe joint as set forth in any one of claim 1 to claim 4, wherein said spacer is a belt member formed into a ring shape.

6. A pipe joint as set forth in claim 5, wherein said spacer has cuts provided at two ends of the belt member engaged with each other.

7. A pipe joint as set forth in any one of claim 1 to claim 4, wherein said spacer is a C-shaped ring.

8. A pipe joint provided with a joint body having a male thread formed at an end and a shoulder continuing from the same, a cap nut having a female thread to be screwed over said male thread, and a C-shape retainer ring arranged so that its outer surface abuts against a tapered inner surface formed at a through hole of said joint body or said cap nut, a clearance formed between said shoulder and said cap nut,
said pipe joint **characterized in that** said cap nut is assembled with said joint body so as to satisfy d≤Z≤d+6 where d is a distance in mm units between said shoulder and said cap nut when said retainer ring starts to be compressed and Z is a distance in mm units between said shoulder and said cap nut.

9. A pipe joint provided with a joint body having a female thread formed at an end, a cap nut having a male thread to be screwed into said female thread and a flange continuing from the same, and a C-shape retainer ring arranged so that its outer surface abuts against a tapered inner surface formed at a through hole of said joint body or said cap nut, a clearance formed between said shoulder and said cap nut,
said pipe joint **characterized in that** said cap nut is assembled with said joint body so as to satisfy d≤Z≤d+6 where d is a distance in mm units between an end face of said flange and an end face of said joint body when said retainer ring starts to be compressed and Z is a distance in mm units between an end face of said flange and an end face of said joint body.

10. A pipe joint as set forth in any one of claim 1 to claim 9, wherein said pipe joint
has an inside cutting edge cutting a recessed groove into an outer surface of the pipe at one end of a break of said retainer ring and
is provided with an interlocking means enabling said cap nut and said retainer ring to rotate together.

11. A pipe joint as set forth in any one of claim 1 to claim 9, wherein
said pipe joint has an interlocking cutting edge at an inner surface of said retainer ring, and
by screwing said cap nut over said joint body, an outer surface of said retainer ring and said tapered inner surface are pressed together, and said interlocking cutting edge of the retainer ring cuts into the outer surface of said pipe.

## Amended claims

### Amended claims under Art. 19.1 PCT

1. (Amended) A pipe joint provided with a joint body having a male thread formed at an end and a shoulder continuing from the same, a cap nut having a female thread to be screwed over said male thread, and a C-shape retainer ring arranged so that its outer surface abuts against a tapered inner surface formed at a through hole of said joint body or said cap nut,
said pipe joint **characterized in that** a spacer to be removed at the time of pipe installation is arranged in a state held between said shoulder of said joint body and said cap nut and said spacer is a belt member formed into a ring shape.

2. (Amended) A pipe joint provided with a joint body having a female thread formed at an end, a cap nut having a male thread to be screwed into said female thread and a flange continuing from the same, and a C-shape retainer ring arranged so that its outer surface abuts against a tapered inner surface formed at a through hole of said joint body or said cap nut,
said pipe joint **characterized in that** a spacer to be removed at the time of pipe installation is arranged in a state held between said joint body and said flange of said cap nut and said spacer is a belt member formed into a ring shape.

3. A pipe joint as set forth in claim 1 or claim 2, wherein said retainer ring is arranged in a state with its inside diameter 0.5 to 3 mm larger than an outside diameter of a pipe inserted from said cap nut side.

4. A pipe joint as set forth in any one of claim 1 to claim 3, wherein said spacer is formed so as to satisfy d≤W≤d+6 where W is a width of the spacer in mm units and d is a distance in mm units between said cap nut end face and a shoulder end face of said joint body when said retainer ring starts to be compressed or a distance in mm units between a flange end face of said cap nut and said joint body end face.

5. (Deleted)

6. (Amended) A pipe joint as set forth in claim 1, wherein said spacer has cuts provided at two ends of the belt member engaged with each other.

7. A pipe joint as set forth in any one of claim 1 to claim 4, wherein said spacer is a C-shaped ring.

8. (Deleted)

9. (Deleted)

10. (Amended) A pipe joint as set forth in any one of claim 1 to claim 4, claim 6, or claim 7, wherein said pipe joint
has an inside cutting edge cutting a recessed groove into an outer surface of the pipe at one end of a break of said retainer ring and
is provided with an interlocking means enabling said cap nut and said retainer ring to rotate together.

11. (Amended) A pipe joint as set forth in any one of claim 1 to claim 4, claim 6, claim 7, or claim 10, wherein
said pipe joint has an interlocking cutting edge at an inner surface of said retainer ring, and
by screwing said cap nut over said joint body, an outer surface of said retainer ring and said tapered inner surface are pressed together, and said interlocking cutting edge of the retainer ring cuts into the outer surface of said pipe.
The applicant requests amendment of the claim of the present international application, based on Article 19(1), of the PCT, and transmits herewith a newly amended claim. We believe the amendment does not go beyond the disclosure in the original international application. An outline of the amendment is as follows.
(1) Amended claim 1 consists of original claims 1 and 5, and amended claim 2 consists of original claims 2 and 5.
(2) Original claims 5, 8 and 9 are deleted.
(3) Original claims 6, 10 and 11 are amended to change the descriptions of the numbers of the antecedent claims which these original claims are dependent on.
